# EUROPÄISCHE PATENTSCHRIFT

(11) **EP 0 477 675 B1**
(45) Veröffentlichungstag und Bekanntmachung des Hinweises auf die Patenterteilung: **15.02.1995**
(21) Anmeldenummer: 91115421.9
(22) Anmeldetag: 12.09.1991
(51) Int. Cl.: B65G 69/00

(54) **Verformbare Dichtung des Spaltes zwischen dem Rand einer Gebäudeöffnung und dem Heck eines an diese herangefahrenen Fahrzeuges**
Flexible sealing of the gap between the edge of an opening in a building and the tail of a vehicle drawn up to the same
Etanchement déformable pour la fente entre le bord d'une ouverture de bâtiment et l'arrière d'un véhicule s'y approchant

(30) Priorität: 25.09.1990 DE 4030267
(43) Veröffentlichungstag der Anmeldung: 01.04.1992
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- US-A- 3 352 314
- US-A- 3 699 733
- US-A- 4 601 142
- US-A- 4 799 342

## Beschreibung

Die Erfindung betrifft eine verformbare Dichtung des Spaltes zwischen dem Rand einer Gebäudeöffnung und dem Heck eines an diese herangefahrenen Fahrzeuges mit einer verformbaren, von in Richtung auf das Gebäude nachgiebigen Tragkörpern gehaltenen Schürze aus einem oben gelegenen Querteil und zwei zu beiden Seiten der Gebäudeöffnung befindlichen, senkrechten Streifen (US-A-3 352 314).

Diese Dichtungen haben sich bereits bewährt, jedoch lassen sich Energieverluste z.B. bei Kühlgebäuden durch Wärmeeintritt oder bei mit Zimmertemperatur betriebenen Lagerhäusern durch den Einfluss kalter Luft im Bereich zwischen den senkrechten Streifen der Schürze von unten her nicht vermeiden, und zwar auch dann nicht, wenn die zu be- oder entladende Plattform für einen gewissen Abschluss nach unten hin sorgt.

Der Erfindung liegt die Aufgabe zugrunde, die eingangs erwähnten Dichtungen so zu verbessern, dass eine wesentliche Verbesserung im Hinblick auf Energieeinsparungen erreichbar ist.

Diese Aufgabe wird erfindungsgemäss dadurch gelöst, dass im Bereich des unteren Endes der senkrechten Streifen ein weiteres, von einem zum anderen Streifen sich erstreckendes Querteil als Bestandteil der nachgiebigen Schürze vorgesehen ist, das an seinem unteren Rand mit einem in Richtung auf das Gebäude elastisch nachgiebigen Tragkörper verbunden ist. Ein solches zusätzliches Querteil in Verbindung mit einem ebenfalls verformbaren, vorzugsweise einem im wesentlichen aus einem weichen Schaumstoffblock bestehenden Tragkörper hat den Vorteil, dass sich diese Elemente der Dichtung unterhalb der Ladeplattform in ausreichendem Masse an die Konturen des Fahrzeuges anpassen können, um so Wärme- bzw. Kälteverluste weitgehend auszuschalten.

Bevorzugte Ausführungsformen der Erfindung sind in den abhängigen Ansprüchen angegeben.

Dabei wird das untere Querteil vorzugsweise so ausgeführt, dass sein oberer, freier Rand zumindest im wesentlichen mit der Bodenfläche des Gebäudes abschliesst, während sich der zugehörige Tragkörper vorzugsweise - waagerecht liegend - in einer solchen Höhenlage befindet, dass er keine unerwünschten Verformungen erfährt, wenn das vordere Ende der meist benutzten Überfahrbrücken seine untere Endstellung erreicht hat. Damit kann eine ausreichende Verformung des unteren Querteils durch Abbiegen nach innen eintreten und zugleich wird verhindert, dass das freie Ende der Überfahrbrücke den elastischen Tragkörper beeinflusst bzw. sogar beschädigen kann.

Vorteilhaft ist ferner, dass das nach oben gerichtete untere Querteil ausreichend in Richtung auf das Gebäude verformbar, zudem aber wiederum so in sich verfestigt ist, dass es im Raum zwischen den beiden senkrechten Streifen ohne fremde Einwirkung formstabil, also senkrecht nach oben stehend verbleibt. Aus diesen Gründen wird das untere Querteil vorteilhafterweise aus zwei aufeinanderliegenden Schürzenstoffen ( z.B. mit Kunststoff oder Gummi behandeltes Gewebe )gebildet, und zudem kann hinter den senkrechten Streifen - am oberen Rand des unteren Querteils angreifend - ein Seil oder Band zum Aufhängen vorgesehen sein, das am oberen Ende in der Nähe des oberen Querteils befestigt bzw. verankert wird.

Weitere Einzelheiten der Erfindung werden anhand der Zeichnung erläutert, in der ein Ausführungsbeispiel der Erfindung dargestellt ist.

Es zeigen :

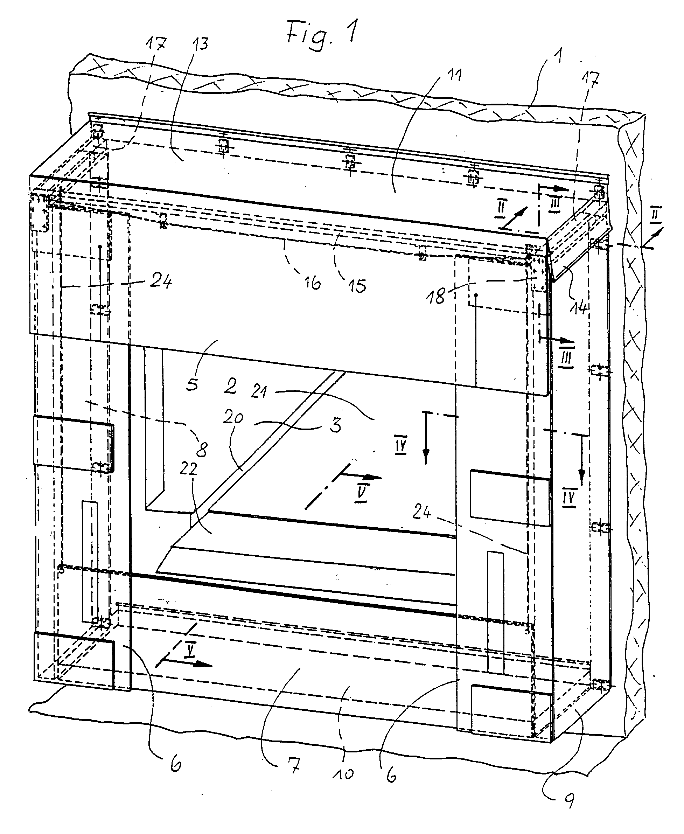

- Fig. 1: eine Dichtung des Spaltes zwischen dem Rand einer Gebäudeöffnung und dem Heck eines an diese herangefahrenen Fahrzeuges, und zwar in schaubildlicher Darstellung,
- Fig. 2: einen Schnitt nach der Linie II - II von Fig. 1,

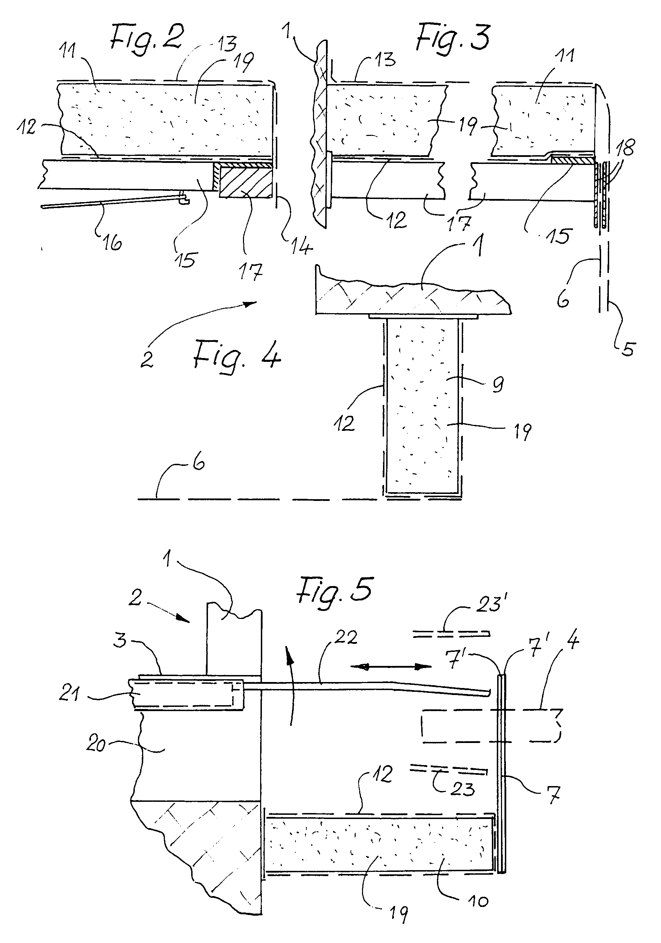

- Fig. 3: einen Schnitt nach der Linie III - III von Fig. 1,
- Fig. 4: einen Schnitt nach der Linie IV - IV von Fig. 1 und
- Fig. 5: einen Schnitt nach der Linie V - V von Fig. 1.

Die Wandung 1 eines als Lagerhaus dienenden Gebäudes hat eine Öffnung 2, die durch ein Sektionaltor od. dgl. verschlossen werden kann. Auf dem Boden 3 des Gebäudes verkehren Flurfördergeräte, mit denen über die Öffnung 2 ein Be- oder Entladebetrieb im Zusammenwirken mit einem vor der Öffnung 2 andockenden Fahrzeug vollzogen wird, dessen Plattform 4 angedeutet ist.

Um Energieverluste und Witterungseinflüsse weitgehend auszuschalten, ist die erfindungsgemässesog. Torabdichtung vorgesehen.

Mit Abstand vor der Wandung 1 ist eine verformbare Schürze angebracht. Sie besteht aus einem oberen Querteil 5 und zwei seitlich neben der Öffnung 2 befindlichen senkrechten Streifen 6. Zur Schürze gehört ferner ein unteres Querteil 7, das sich im Bereich der unteren Enden der Streifen 6 befindet. Während sich jedoch das obere Querteil 5 vor den Streifen 6 befindet, ist das untere Querteil 7 eng anliegend hinter den Streifen 6 angeordnet. Die Elemente 5, 6 und 7 bestehen aus einem zugfesten, lappigen, folienartigen Material z.B. einem mit Gummi oder Kunststoff behandelten Gewebe. Um die Schürzenteile 5 - 7 in Richtung auf das Gebäude elastisch nachgiebig haltern und lagern zu können, werden sie an der Stirnseite von Tragkörpern 8, 9 und 10 befestigt, die einen tragenden Kern 19 aus einem weich eingestellten Kunstschaum und einen ang anliegenden, aus Gewebe od. dgl. bestehenden, biegsamen, zugfesten Bezug 12 aufweisen. Die Befestigung dieser Tragkörper 8 - 11 erfolgt in beliebiger Weise an der Wandung 1; sie bilden zudem einen ( nicht geschlossenen ) Rahmen, der die Öffnung 2 umschliesst. Allerdings können die einzelnen Tragkörper zusammen mit den Elementen 5 - 7 unabhängig voneinander verformt werden, wenn eine Belastung oder Verformung in Richtung auf das Gebäude erfolgt. Die vier Tragkörper 8 -11 schliessen zudem mit ihrem Bezug 12 nach aussen hin, also zur Seite , nach oben und nach unten die Dichtung ab. Dies schliesst nicht aus, dass die oben liegende Dachplane 13 ggfs. gesondert angebracht wird; sie ist im übrigen wasserdicht mit dem Gebäude verbunden. Auch geht von der Dachplanne 13 zu beiden Seiten der Dichtung ein Überhang 14 aus, der den Spalt zwischen den Tragkörpern 8 bzw. 9 einerseits und dem Tragkörper 11 andererseits überdeckt.

Um einen Durchgang des Querteils 5 mit dem Tragkörper 11 auszuschliessen, ruht der Tragkörper 11 vorne auf einem Stahlträger 15, der durch eine Seilverspannung 16 biegesteif gemacht ist. Die Enden des Tragkörpers 11 ruhen lose auf einer Wandkosole 17. Daher kann der Tragkörper 11 ggfs. nach oben abheben bzw. dorthin nachgeben. Ggfs. kann auch die Konstruktion der Wandkonsolen 17 so gewählt werden, dass sie durch Teleskopanordnung längenverkürzbar werden, wenn ein übermässiger Druck vom Fahrzeug ausgeübt werden sollte. Im übrigen dient die Stirnseite der Wandkonsolen 17 auch zur Halterung der oberen Enden der Streifen 6; wozu sie mittels Platten 18 eingeklemmt werden.

Um den Überfahrbetrieb zwischen dem Lagerhaus und dem Fahrzeug zu erleichtern, befindet sich innerhalb des Gebäudes hinter bzw. noch in der Öffnung 2 im Boden 3 eine rechteckige Ausnehmung 20 zur Aufnahme einer um ihre hintere , waagerechte Querachse verschwenkbaren Brückenplatte 21, die vorne mit einer aus- und einfahrbaren Verlängerung 22 zur Abstützung der Brücke auf der Plattform 4 versehen ist.Bei ausgefahrener Verlängerung 22 hat sie eine untere Endstellung bei 23 nahe oberhalb des Tragkörpers 10 und eine obere Endstellung 23' je nach der Höhe der zu bedienenden Plattform 4. Dabei endet das freie Ende der Verlängerung 22 nahe vor dem unteren Querteil 7.

Um einen Durchang des unteren Querteils 7 und des zugehörigen Tragkörpers 10 auszuschalten, besteht das untere Querteil 7 aus zwei nahe beieinander, bzw. aufeinanderliegenden Lagen 7' aus mit Gummi O. dgl. behandeltem Gewebe, um dadurch eine Trägerwirkung über die Länge des Tragkörpers 10 hinweg zu erreichen. Zudem greifen am oberen Rand an den Enden des Querteils 7 elastische Halteschnüre 24 an., die oben z.B. an den Wandkonsolen 17 befestigt sind. Daher kann sich sowohl das Querteil 7 als auch der zugehörige Tragkörper 10 weitgehend den Konturen des Hecks eines Fahrzeuges anpassen. Es wird dann für eine gute Wärmedämmung auch im unteren Teil der Dichtung Sorge getragen.

Es versteht sich dabei, dass die Elemente 5 - 7 festhaftend mit den zugehörigen Trag-körpern 8 -11 ggfs. durch Klebung zu verbinden sind, um durch Verformen dieser Elemente keine Trennung von den Tragkörpern herbeizuführen. Da ausserdem die Tragkörper 8 - 10 infolge der Schaumstruktur wärmedämmend sind und diese die Öffnung 2 ganz umschliessen, werden die Energieverluste auf ein Minimum herabgesetzt. Die Schürze legt sich im übrigen durch Abbiegen in Richtung auf das Gebäude eng an das Fahrzeugheck an. Dies trifft insb. für das Querteil 7 zu, wenn es beim Andocken von der Plattform 4 erfasst wird.

## Patentansprüche

1. Verformbare Dichtung des Spaltes zwischen dem Rand einer Gebäudeöffnung und dem Heck eines an diese herangefahrenen Fahrzeuges mit einer verformbaren, von in Richtung auf das Gebäude nachgiebigen Tragkörpern gehaltenen Schürze aus einem oben gelegenen Querteil (5) und zwei zu beiden Seiten der Gebäudeöffnung befindlichen senkrechten Streifen (6), dadurch gekennzeichnet, dass im Bereich des unteren Endes der Streifen (6) ein weiteres, sich von einem zum anderen Streifen (6) erstreckendes Querteil (7) als Bestandteil der nachgiebigen Schürze vorgesehen ist, das an seinem unteren Rand mit einem in Richtung auf das Gebäude nachgiebigen Tragkörper (10) verbunden ist.

2. Dichtung nach Anspruch 1, dadurch gekennzeichnet, dass sich das Querteil (7) hinter den Streifen (6) befindet.

3. Dichtung nach Anspruch 1, dadurch gekennzeichnet, dass das Querteil (7) aus mehreren, vorzugsweise zwei aneinanderliegenden Lagen (7') z.B. aus Gewebe mit einer Beschichtung aus Gummi oder Kunststoff besteht.

4. Dichtung nach Anspruch 1, dadurch gekennzeichnet, dass der Tragkörper (10) aus einem mit dem hinteren Rand am Gebäude befestigten Block aus weich eingestelltem, elastisch nachgiebigem Schaum besteht.

5. Dichtung nach Anspruch 1 und 4, dadurchgekennzeichnet, dass der Block eng von einem zugfesten, biegsamen Bezug (12) umschlossen ist, an dem das Querteil (7) befestigt ist.

6. Dichtung nach Anspruch 1, dadurch gekennzeichnet, dass seitlich aussen an der Dichtung am oberen Rand des Querteils (7) ein vorzugsweise elastisches Zugseil (24) angreift.

7. Dichtung nach Anspruch 1, dadurch gekennzeichnet, dass das Querteil (7) mit seinem Tragkörper (10) unabhängig von den beiden Streifen (6) und den zugehörigen Tragkörpern verformbar ist.

8. Dichtung nach Anspruch 1, dadurch gekennzeichnet, dass auch das obere Querteil (5) am freien Ende eines Blockes aus weich eingestelltem, elastisch nachgiebigem Schaum befestigt ist.

9. Dichtung nach Anspruch 1, dadurch gekennzeichnet, dass auch die Streifen (6) am freien Ende eines Blockes aus weich eingestelltem, elastisch nachgiebigem Schaum befestigt sind.

10. Dichtung für ein Gebäude mit einer hinter der Dichtung befindlichen Überfahrbrücke mit einer verschwenkbaren Brückenplatte und einer ein- und ausfahrbaren Verlängerung am freien Ende der Brückenplatte nach Anspruch 1, dadurch gekennzeichnnet, dass der obere Rand des unteren Querteils (7) im wesentlichen auf der Höhe angeordnet ist, die durch die Oberfläche der in der Ruhestellung befindlichen Überfahrbrücke bzw. den Boden (3) des Gebäudes bestimmt ist.

11. Dichtung für ein Gebäude mit einer hinter der Dichtung befindlichen Überfahrbrücke mit einer verschwenkbaren Brükenplatte und einer ein- und ausfahrbaren Verlängerung am freien Ende der Brückenplatte nach Anspruch 1, dadurch gekennzeichnet, dass die Spitze der ausgefahrenen Verlängerung (22) in der unteren Endstellung der Brückenplatte nahe oberhalb des Tragkörpers (10) für das untere Querteil (7) angeordnet ist.

12. Dichtung nach Anspruch 2, dadurch gekennzeichnet, dass sich das obere Querteil (5) in bekannter Weise vor den Streifen (6) befindet.

13. Dichtung mit einer hinter der Dichtung befindlichen Überfahrbrücke mit einer verschwenkbaren Brückenplatte und einer ein- und ausfahrbaren Verlängerung am freien Ende der Brückenplatte nach Anspruch 1, dadurch gekennzeichnet, dass die Spitze der ausgefahrenen Verlängerung (22) nahe hinter dem unverformten unteren Querteil (7) angeordnet ist.

14. Dichtung nach Anspruch 8, dadurch gekennzeichnet dass der das obere Querteil (5) tragende Block am freien Ende von einem festen Träger (15) unterstützt ist, dessen Enden frei auf einer Wandkonsole (17) in der Weise aufliegen, dass Relativbewegungen des Trägers gegenüber der Wandkonsole möglich sind ggfs. der Block mit dem zugehörigen Querteil (5) vorne abhebbar ist, wobei die Konsolen im Bereich der Enden des oberen Querteils - vorzugsweise im oberen Eckbereich der Dichtung - angeordnet sind.

15. Dichtung nach Anspruch 6, dadurch gekennzeichnet, dass das Zugseil (24) oben an einer Wandkonsole (17) befestigt ist.

16. Dichtung nach Anspruch 14, dadurch gekennzeichnet, dass die Wandkonsole (17) auch zur Halterung der oberen Ränder - vorzugsweise der seitlich aussen gelegenen Abschnitte dieser Ränder - der Streifen (6) dient.

## Claims

1. Deformable seal for sealing the gap between the edge of an opening in a building and the rear of a vehicle which has been driven up to said opening, having a deformable apron, which is retained by supporting bodies resilient in the direction of the building and is formed from an upper transverse member (5) and two vertical strips (6), which are situated on each side of the opening in the building, characterised in that an additional transverse member (7), which extends from one strip (6) to the other, is provided in the region of the lower end of the strips (6) as a component part of the resilient apron and is connected, at its lower edge, to a supporting body (10), which is resilient in the direction of the building.

2. Seal according to claim 1, characterised in that the transverse member (7) is situated behind the strips (6).

3. Seal according to claim 1, characterised in that the transverse member (7) comprises a plurality of layers (7'), preferably two, which lie adjacent each other and are formed, for example, from fabric having a coating of rubber or plastics material.

4. Seal according to claim 1, characterised in that the supporting body (10) comprises a block, which is secured to the building by its rear edge and is formed from soft-set, resilient foam.

5. Seal according to claims 1 and 4, characterised in that the block is closely surrounded by a substantially inextensible, flexible covering (12), to which the transverse member (7) is secured.

6. Seal according to claim 1, characterised in that a tension cable (24), which is preferably resilient, engages laterally externally with the seal on the upper edge of the transverse member (7).

7. Seal according to claim 1, characterised in that the transverse member (7) is deformable with its supporting body (10) independently of the two strips (6) and the associated supporting bodies.

8. Seal according to claim 1, characterised in that the upper transverse member (5) is also secured to the free end of a block formed from soft-set, resilient foam.

9. Seal according to claim 1, characterised in that the strips (6) are also secured to the free end of a block formed from soft-set, resilient foam.

10. Seal for a building, having a bridging device which is situated behind the seal and is provided with a pivotable bridge plate and a retractable and extensible extension member on the free end of the bridge plate, according to claim 1, characterised in that the upper edge of the lower transverse member (7) is disposed substantially at a level which is determined by the surface of the bridging device, which is in its inoperative position, or by the base (3) of the building.

11. Seal for a building, having a bridging device which is situated behind the seal and is provided with a pivotable bridge plate and a retractable and extensible extension member on the free end of the bridge plate, according to claim 1, characterised in that the end of the extended extension member (22) is disposed closely above the supporting body (10) for the lower transverse member (7) when the bridge plate is in its lower end position.

12. Seal according to claim 2, characterised in that the upper transverse member (5) is situated in front of the strips (6) in known manner.

13. Seal, having a bridging device, which is situated behind the seal and is provided with a pivotable bridge plate and a retractable and extensible extension member on the free end of the bridge plate, according to claim 1, characterised in that the tip of the extended extension member (22) is disposed closely behind the non-deformed lower transverse member (7).

14. Seal according to claim 8, characterised in that the block carrying the upper transverse member (5) is supported on the free end by a fixed carrier (15), the ends of which rest freely on a wall bracket (17) in such a manner that relative movements between the carrier and the wall bracket are possible, or the block is displaceable at the front with the associated transverse member (5), the brackets being disposed in the region of the ends of the upper transverse member - preferably in the upper corner region of the seal.

15. Seal according to claim 6, characterised in that the tension cable (24) is secured at its upper end to a wall bracket (17).

16. Seal according to claim 14, characterised in that the wall bracket (17) also serves to support the upper edges - preferably the laterally externally situated portions of these edges - of the strips (6).

## Revendications

1. Système déformable d'étanchéité de la fente présente entre le bord d'une ouverture d'un bâtiment et l'arrière d'un véhicule appliqué contre cette ouverture on approché de celle-ci, comportant un tablier déformable, retenu par des corps de support pouvant fléchir en direction du bâtiment et constitué par une partie transversale située en position haute (5), et par deux bandes verticales (6) situées des deux côtés de l'ouverture du bâtiment, caractérisé par le fait qu'au voisinage de l'extrémité inférieure des bandes (6) est prévue une autre partie transversale (7), qui s'étend d'une bande (6) à l'autre, en tant que composant du tablier flexible et qui est reliée, au niveau de son bord inférieur, à un corps de support (10) qui est flexible en direction du bâtiment.

2. Système d'étanchéité suivant la revendication 1, caractérisé par le fait que la partie transversale (7) est située derrière les bandes (6).

3. Système d'étanchéité suivant la revendication 1, caractérisé par le fait que la partie transversale (7) est constituée par plusieurs couches (7'), de préférence juxtaposées, formées par exemple d'un tissu comportant un revêtement en caoutchouc ou en matière plastique.

4. Système d'étanchéité suivant la revendication 1, caractérisé par le fait que le corps de support (10) est constitué par un bloc, qui est fixé au bord arrière sur le bâtiment et est réalisé en une mousse réglée de manière à être molle et flexible élastiquement.

5. Système d'étanchéité suivant les revendications 1 et 4, caractérisé par le fait que le bloc est étroitement entouré par un revêtement flexible (12), qui résiste à l'attraction et auquel est fixée la partie transversale (7).

6. Système d'étanchéité suivant la revendication 1, caractérisé par le fait qu'un câble de traction de préférence élastique (24) est accroché latéralement à l'extérieur le système d'étanchéité au niveau du bord supérieur de la partie transversale (7).

7. Système d'étanchéité suivant la revendication 1, caractérisé par le fait que la partie transversale (7) ainsi que son corps de support (10) peuvent être déformés indépendamment des deux bandes (6) et des corps de support associés.

8. Système d'étanchéité suivant la revendication 1, caractérisé par le fait que, également, la partie transversale supérieure (5) est fixée à l'extrémité libre d'un bloc formé d'une mousse réglée de manière à être molle et flexible élastiquement.

9. Système d'étanchéité suivant la revendication 1, caractérisé par le fait que, également, les bandes (6) sont fixées sur l'extrémité libre d'un bloc réalisé en une mousse réglée de manière à être molle et flexible élastiquement.

10. Système d'étanchéité pour un bâtiment comportant un pont de transfert situé en arrière du système d'étanchéité et équipé d'un plateau basculant et d'un prolongement pouvant être rétracté et déployé, qui est installé à l'extrémité libre du plateau du pont suivant la revendication 1, caractérisé par le fait que le bord supérieur de la partie transversale inférieure (7) est disposé essentiellement à la hauteur qui est déterminée par la surface supérieure du pont de transfert situé dans la position de repos ou du plancher (3) du bâtiment.

11. Système d'étanchéité pour un bâtiment comportant un pont de transfert situé en arrière du système d'étanchéité et équipé d'un plateau basculant et d'un prolongement pouvant être rétracté et déployé, qui est installé à l'extrémité libre du plateau du pont suivant la revendication 1, caractérisé par le fait que, lorsque le plateau du pont est dans sa position d'extrémité inférieure, la pointe du prolongement déployé (22) est disposée à proximité et au-dessus du corps de support (10) pour la partie transversale inférieure (7).

12. Système d'étanchéité suivant la revendication 2, caractérisé par le fait que la partie transversale supérieure (5) est située de façon connue en avant des bandes (6).

13. Système d'étanchéité équipé d'un pont de transfert situé en arrière du système d'étanchéité et possédant un plateau basculant du pont et un prolongement pouvant être rétracté et déployé, installé sur l'extrémité libre du plateau du pont suivant la revendication 1, caractérisé par le fait que la pointe du prolongement (22) déployé est disposée à proximité et en arrière de la partie transversale inférieure (7) non déformée.

14. Système d'étanchéité suivant la revendication 8, caractérisé par le fait que le bloc, qui porte la partie transversale supérieure (5), prend appui sur l'extrémité libre d'un support fixe (15), dont les extrémités prennent appui librement sur une console murale (17) de telle sorte que des déplacements relatifs du support par rapport à la console murale sont possibles et que, éventuellement, le bloc et la partie transversale associée (5) peuvent être écartés vers l'avant, les consoles étant disposées dans la zone des extrémités de la partie transversale supérieure - de préférence dans la zone d'angle supérieure du système d'étanchéité.

15. Système d'étanchéité suivant la revendication 6, caractérisé par le fait que le câble de traction (24) est fixé à la partie supérieure d'une console murale (17).

16. Système d'étanchéité suivant la revendication 14, caractérisé par le fait que la console murale (17) sert également à maintenir les bords supérieurs - de préférence les sections extérieures latérales de ces bords - des bandes (6).
